# EUROPEAN PATENT SPECIFICATION

(11) **EP 0 487 637 B1**
(45) Date of publication and mention of the grant of the patent: **23.12.1998**
(21) Application number: 90913593.1
(22) Date of filing: 15.08.1990
(51) Int. Cl.: F16M 13/00, F16F 15/06, F16F 3/02

(54) **VIBRATION ISOLATION SYSTEM**
SCHWINGUNGSDÄMPFUNGSSYSTEM
SYSTEME D'ISOLATION CONTRE LES VIBRATIONS

(30) Priority: 16.08.1989 US 395093
(43) Date of publication of application: 03.06.1992
(73) Proprietor: PLATUS, David L., Santa Monica, CA 90405 (US)
(72) Inventor: PLATUS, David L., Santa Monica, CA 90405 (US)
(74) Representative: Baillie, Iain Cameron
(86) International application number: US9004608
(87) International publication number: WO9102921

(56) References cited:
- GB-A- 394 969
- US-A- 1 545 540
- US-A- 2 313 893
- US-A- 2 572 919
- US-A- 2 932 482
- US-A- 3 028 138
- US-A- 3 223 400
- US-A- 3 464 657
- US-A- 3 592 422
- US-A- 3 606 704
- US-A- 3 727 865
- US-A- 4 511 115

## Description

### Field of the Invention

The present invention relates generally to methods and apparatus for suspending an object having weight relative to a base, and for isolating or reducing the transmission of vibrations between the object and the base on which the apparatus is supported, and more particularly, to an omni-directional suspension or vibration-isolating system that exhibits low stiffness that can be made zero or near-zero, both vertically in the direction of the weight load, and horizontally in directions transverse to the weight load, to effectively reduce the transmission of vibrations between the object and the base.

The invention also relates to other applications of zero or near-zero-spring-rate suspension systems such as simulating a zero-gravity environment or for optical pointing or measurement systems or any system where it is desirable to provide small motions of a suspended object without resistance from spring forces or mechanical friction.

### Description of the Prior Art

Numerous devices, commonly called vibration isolators, have been developed for reducing the transmission of unwanted vibrations between an object and its surroundings. Isolators exhibit stiffnesses or spring rates such that objects supported on them have natural frequencies of vibration substantially lower than the frequencies of the unwanted vibrations. Generally, the higher the frequencies of the unwanted vibrations relative to the natural frequencies of the object supported on the isolators, the more effective the isolators in isolating these vibrations.

The success of an isolation system design depends on the motion- or vibration-sensitivity of the isolated object, in terms of both magnitudes and frequencies of allowable vibrations, as well as the magnitudes and frequencies of the input vibrations. The same considerations apply when the isolation system is designed to isolate a vibrating object from a support structure or base, as is the case of isolating noisy equipment on a submarine from the submarine hull.

High-frequency vibrations produced by machinery, for example, can be effectively isolated by a variety of prior art isolation system techniques such as resilient pads made from of a variety of materials and various types of mechanical springs. When vibration input frequencies are very low, such as 10 Hz or lower, the choices of prior art solutions become much more limited, particularly when the vibration amplitudes are very small, such as a micro-g of acceleration or a micron of displacement.

For isolation of the most minute ambient vibrations of interest with extremely motion-sensitive equipment, the lowest natural frequencies generally achievable by prior art pneumatic systems are limited to about 2 or 3 Hz due to the stiffness associated with the elastomeric diaphragms or housings typically used in pneumatic isolators. Also, pneumatic isolators have additional problems and limitations such as sealing problems or gradual air leakage, and limited temperature ranges within which they can effectively operate.

One attempt at providing a device for isolating vibrations is described in U.S. Patent 2,580,815 issued to Mooney entitled "Vibration Isolating Support". This document shows the prior art according to the preamble of claim 1. The Mooney vibration isolating mechanism includes, for isolation of the vertical vibrations, a leaf spring construction designed to give a load-deflection curve of sigmoid form, having a slope at the point of inflection equal to zero. At such point the restoring force is constant with changing deflection. Under these conditions, vertical vibrations, even of very low frequency are substantially eliminated by the spring. To obtain isolation of vibrations in all directions, this mechanism for isolationg vertical vibrations is combined with a supporting member for the instrument to be isolated, and vertical rods for supporting the member and carrying part of the weight supported by it, each rod having a universal joint at each end. The remainder of the weight is carried by wires or similar flexible suspension members depending form an overhead resilitient support comprising a plurality of leaf springs. When the proper relation between the lengths of the wires and rods and the proportion of the weight supported by the wires and by the rods is obtained, this mechanism is capable of substantially eliminating horizontal vibrations, even of low frequencies.

Accordingly, those concerned with the development and use of vibration isolation systems and apparatus have long recognized the need for improved vibration isolation, particularly in the low frequency ranges. Preferably, an improved device should be compact and relatively light in weight and should provide improved vibration isolation at low and high frequencies in both vertical and horizontal directions. Also, such a system or apparatus should be able to isolate vibrations of extremely small amplitude, such as micro-seismic motions, without significant loss of performance.

### SUMMARY OF THE INVENTION

This invention is defined by the features of claim 1.

Briefly, and in general terms, the present invention provides a versatile vibration isolation system that exhibits low stiffness that can be made zero or near zero, both vertically and horizontally, to provide vibration isolation capabilities in all directions. The system offers a substantial improvement over state-of-the-art isolation systems in reducing transmission of vibrations to precision equipment and sensitive machinery, with particularly those vibrations in a low frequency range and with very small vibration amplitudes.

The vibration isolation system of the present invention utilizes various configurations of elastic structures loaded to approach a point of elastic instability. The elastic instability associated with each configuration has an instability mode shape or buckling mode into which the structure deforms as it goes unstable or buckles. Right at the instability point, where the load causing the instability is right at the so-called "critical buckling load", the structure can be given a small deflection into the buckled shape with essentially zero resisting force, or zero spring rate. If the instability-producing load is slightly below the critical buckling load, the structure can be given a small deflection into the instability mode shape with very little resisting force thereby exhibiting very low stiffness. The magnitude of the stiffness depends on how closely the instability point is approached. It is this principle that is used in the present invention to create the zero or near-zero stiffness.

If the load causing the instability is greater than the critical bucklinq load, then as the structure deforms into the buckled shape, the excess load will tend to propel the structure into the buckled shape creating a negative-stiffness or negative-spring-rate mechanism. A common example is the "snap-through" or "over-center" mechanism. By combining a negative-stiffness mechanism with a positive spring, adjusted so that the positive and negative stiffnesses just cancel, the resulting device is now at a point of elastic instability and will exhibit zero or near-zero stiffness for small deflections around a center-point or center position where the structure goes from its unbuckled to its buckled shape or from its initial shape to its instability mode shape. This principal is also used in the present invention. Further, by controlling the magnitude of the load causing the negative stiffness, a means is created by which the net stiffness of the device can be adjusted or "fine-tuned" either manually, for adjusting a passive isolation system, or automatically in an active isolation system using motion sensing elements, a feed-back loop, and an actuating means for adjusting the instability-producing load and the system stiffness. This invention also uses, in some embodiments, means for adjusting the positive spring stiffness in order to adjust the net stiffness of the system.

The vibration isolation system of the present invention utilizes a vertical-motion isolation system that supports the weight of the object and provides low stiffness in the vertical direction, and a horizontal-motion isolation system that supports the object and provides low stiffness in any horizontal direction.

The vertical-motion isolation system utilizes a configuration of one or more isolators that produce an instability mode shape such that the associated deflections are uniaxial, that is, they occur in only one direction. For vibration isolation applications where an object is supported in a gravity field, this axis of the isolator corresponding to the instability direction is aligned vertically in the direction of the weight load. The vertical-motion isolators also utilize a configuration that enables them to support a weight load and still provide zero or near-zero stiffness in the vertical direction. The load-supporting capability of these isolators is also adjustable.

The horizontal-motion isolation system utilizes a configuration of one or more horizontal-motion isolators that produce a structure having many elastic instability or buckling modes that are symmetric about a vertical axis. In one form of the invention, the horizontal-motion isolation system utilizes one or more axially-symmetric column members that behave as fixed-free columns. Each column member, and the resulting system, has many instability modes (theoretically, an infinite number) such that the initial shape of the instability mode or buckling mode is a lateral displacement of the upper end of the column relative to the lower end. Each column member is designed to support a portion of a payload weight that approaches the critical buckling load of that member. As a result, each column member cooperates to provide sufficient axial stiffness in supporting the payload weight yet provides little or no stiffness in any horizontal direction.

The present invention can be used, for example, to provide a stable platform for testing sensitive equipment or supporting precision manufacturing equipment. The system is suited for use with photolithography equipment used in the microelectronics industry, optical instruments including laser based equipment, electronic scanning tunneling microscopes, and many more practical applications such as isolating buildings or equipment from earthquakes. Since the isolation system is also capable of isolating vibrations of a payioad, it can also be used to isolate a vibrating payload from the surrounding environment. One example of a practical application would be to isolate the vibrating equipment on a submarine to reduce the vibrations of the hull. Such a device would create a quieter running submarine which would be more difficult to detect. Additionally, since the vertical stiffness can be reduced to near zero, the isolator can simulate zero gravity, thus making the present invention adaptable for testing instruments in a simulated zero-gravity environment.

All in all, the present invention provides a system that is capable of providing zero or near-zero stiffness in both the vertical and any horizontal direction and also provides an isolation system that is capable of suppressing the transmission of extremely low frequency vibrations between a payload and a base. The system that can be used passively, or with motion sensing elements, a feed-back loop and actuating means so it can be used as an active system. The invention also provides an isolation system that is essentially free from mechanical friction i.e., energy dissipation within the system is limited to internal hysteresis within the structural material. The system therefore effectively isolates payloads from even the most minute ambient vibrations. The system that can be constructed entirely from structural metals or other structural materials to resist adverse environments such as high temperatures, hard vacuums and corrosive environments.

Other features and advantages of the present invention will become apparent from the following detailed description, when taken in conjunction with the accompanying drawings, which illustrate, by way of example, the present invention.

### BRIEF DESCRIPTION OF THE DRAWINGS

FIG. 1 is a perspective view of one embodiment of a vibration isolation system made in accordance with present invention;
FIG. 2 is a perspective view of one embodiment of a general purpose isolator made in accordance with the present invention;
FIG. 3 is a force vs. displacement characteristic for the isolator shown in Fig.2, illustrating the spring rate or stiffness characteristics of a positive spring means and a negative-stiffness mechanism, and the net effective stiffness for the isolator.
FIG. 4 is a plan view of the isolator shown in Figure 2 with a partial fragmentary section illustrating the mounting of the loading flexure assembly to the base;
FIG. 5 is a side elevational view of the embodiment shown in Figure 2;
FIG. 6 is a cross-sectional side view of the embodiment shown in Figure 2;
FIG. 7 is a cross-sectional side view of the embodiment shown in Figure 6 taken along line 7-7;
FIGS. 8(a) and 8(b) are partial fragmentary representations showing a loading flexure assembly in its loaded state in Figure 8(b) and its unloaded state in Figure 8(a);
FIGS. 9(a) and 9(b) are partial fragmentary representations showing a radial flexure in its loaded state in Figure 9(a) and its unloaded state in Figure 9(b);
FIG. 10 is a partial cross-sectional view showing the fine adjustment mechanism used to adjust the radial force on the radial flexure;
FIG. 11 is an alternative embodiment of the invention which depicts multiple radial flexures that can be implemented in accordance with the present invention;
FIG. 12 is a side elevational view of the embodiment of a vibration isolation system made in accordance with the present invention;

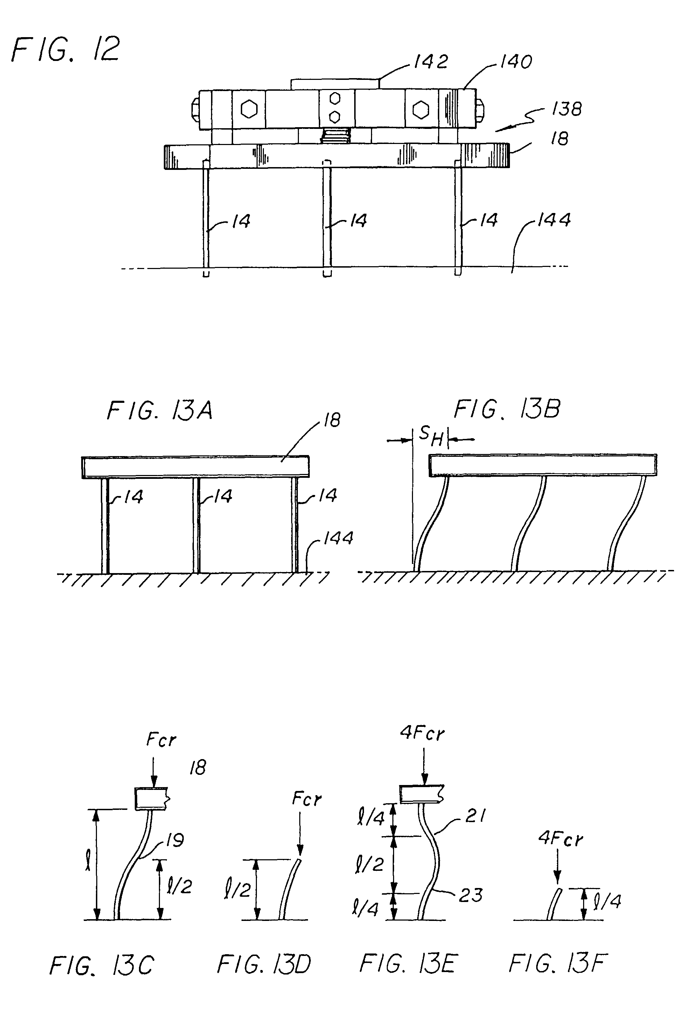

FIGS.13(a) to (f) are elevation views of a horizontal-motion isolation system comprising three column members supporting a platform, illustrating instability modes of the column members. FIG. 13a shows the undisplaced system: FIGS 13b and 13c illustrate the column member deformation mode under normal operation around the instability point; FIG. 13d shows an equivalent fixed-free column at the instability point; FIG. 13e shows the buckling mode of a column member with the platform constrained to small horizontal displacements; and FIG. 13f is the equivalent fixed-free column for the column member of FIG. 13e; and
FIG.14 is a partial cross-sectional side view of an alternative embodiment of a horizontal-motion isolation system, showing means for adjusting the weight loads applied to the column members isolators.

### DETAILED DESCRIPTION OF THE PREFERRED EMBODIMENTS

As is shown in the drawings for the purpose of illustration, the present invention is embodied in an omnidirectional isolation system that is capable of effectively isolating object, especially a motion-sensitive instrument, from the effects of vibrations and other undesirable mo'ions, or isolating a vibrating object from a base. The invention is also directed to the individual vertical-motion and horizontal-motion isolators that cooperatively associate to form the isolation system.

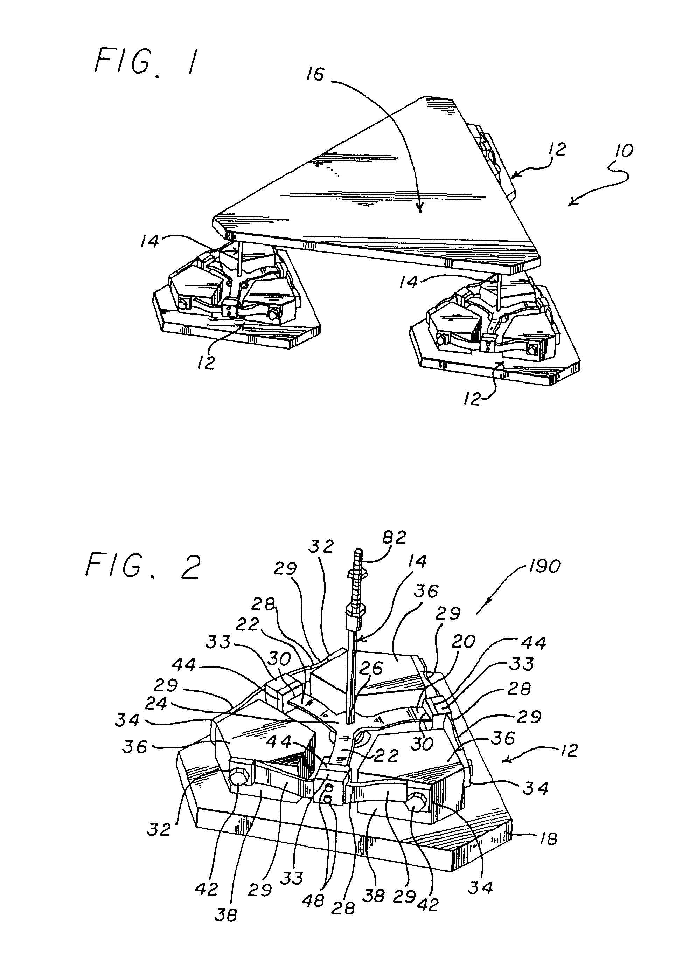

FIG. 1 shows one embodiment of a vibration isolation system 10 made in accordance with the present invention. The system 10 utilizes several novel vertical-motion isolation apparatus or isolators 12 that are used to resiliently support the object to be isolated. These vertical-motion isolators (discussed in greater detail below) provide one means for suppressing the transmission of vibrations in the vertical direction.

These vertical-motion isolators 12 operate by utilizing a spring means, that supports the weight load, and a mechanism capable of producing negative stiffness that counter-acts the positive stiffness of the spring means. As a result, a low net stiffness (approaching zero) may be achieved. Means for adjusting the negative stiffness are also provided to "fine tune" the isolator to obtain zero, or near zero net spring stiffness. This combination produces a vertical-motion isolator that can isolate vibrations at very low-frequencies and improve the isolation at higher frequencies.

The system 10 combines the vertical-motion isolators 12 with one example of a novel horizontal-motion vibration isolation system that consists of at least three column members 14 (only two of which are shown in FIG. 1) that provide relatively stiff support in the vertical direction and resilient support in any horizontal direction. Each column member 14 is rigidly attached at its lower end to one of the vertical motion isolators 12, and is rigidly attached at its upper end to the payload or to a platform that supports the payload. Each column member 14 can undergo a specific condition of unstable equilibrium when a certain vertical load is applied to the member. The critical value of this load is called the critical buckling load of the member. Once this load is imported to the member, any additional load would cause the member to begin to buckle or deform into its buckled or instability mode shape. This is discussed further, below, with the aid of FIGS. 13a to 13f.

The objective of the design is to load each of these three column members 14 axially with a weight that approaches the critical buckling load of the member. The member 14 will still be sufficiently sturdy support the payload weight, however, there will be little or no stiffness in any horizontal direction for any of these members. As a result these members will suppress the transmission of horizontal vibrations between the payload and the base. Another aspect of the present invention is a safety or "fail safe" mechanism (further discussed below) that allows the column member isolators to operate at or very near their instability points and provides a satisfactory safety factor against collapse or damage to the payload or the isolation system components. This combination of vertical-motion and horizontal-motion isolators creates a system capable of isolating vibrations in virtually any direction.

The particular arrangement of the vertical-motion and horizontal-motion isolators shown in FIG. 1 is just one of the numerous combinations that are possible under the present invention. For example, the system of FIG. 1 utilizes three vertical-motion isolators as base members that support a payload that includes the horizontal-motion isolation members 14, the platform 16 and the object to be isolated. Other combinations are also possible utilizing the horizontal-motion isolation members 14 as base members for supporting and isolating its payload. For example, in one such arrangement, shown in FIG. 12 and discussed in greater detail below, only one vertical-motion isolator is used and is supported by the three horizontal-motion isolation members. The number of vertical-motion isolators that are implemented may vary and their placement in relation to the horizontal-motion isolation members can take on many different combinations that are all within the scope of the present invention.

In practice, the horizontal-motion isolation system typically uses at least three horizontal-motion isolation members to properly support any object. In some applications, many more horizontal-motion isolation members may be used to provide the necessary support, and in other applications, only one horizontal-motion isolation member may be used.

Referring now to FIGS. 2, 4, 5 and 6, one embodiment of a vertical-motion isolator 12 used in the system depicted in FIG. 1 is illustrated. In FIG. 2, the platform 16 has been removed to better show the components that make up this particular isolator.

The vertical-motion isolator 12 includes a stationary base 18 upon which a spring means 20 is mounted. This particular spring means 20 supports the weight load and provides a positive spring stiffness in the vertical direction. This spring means 20 includes three radial flexures 22 that are attached to each other at a central hub 24. This hub 24 acts as the central point that supports the object to be isolated. In this particular arrangement, the central hub 24 supports one end 26 of horizontal-motion isolation member 14. In other embodiments, the hub 24 can be attached to a support structure, such as a platform, which supports the isolated object or alternatively, it can be attached to the object directly.

These three radial flexures 22 are spatially arranged from each other in approximate 120° orientation. Each radial flexure 22 acts as a beam-column having high axial stiffness but sufficient bending flexibility to permit it to bend or "flex" significantly when subjected to bending moments caused by vertical loads. This bending flexibility provides the positive vertical stiffness of the spring means.

The compressive forces also cause the radial fiexures or beam-columns to behave as negative-stiffness mechanisms and provide a negative stiffness at the hub 24 in the vertical direction. At a critical value of the radial compressive force, which corresponds to the critical buckling load of the flexure or beam-column, a point of elastic instability is produced. This point of elastic instability is also the point at which the negative vertical stiffness caused by the radial compressive force just cancels the positive vertical stiffness associated with flexural deformations of the radial flexure. As the critical value of radial compressive force, or critical buckling load, is approached, the net vertical stiffness of the isolator structure decreases until, at the critical value or point of elastic instability, the n vertical stiffness is zero. Also, the isolator geometry is such that the deflections associated with the mode of instability, or the buckling mode, are substantially vertical displacements, or displacements along the axis of the isolator. Thus, an isolator is produced that can support weight load in its vertical or axial direction, and whose net vertical stiffness can be adjusted to a zero or near-zero value by adjusting the radial compressive forces on the radial flexures.

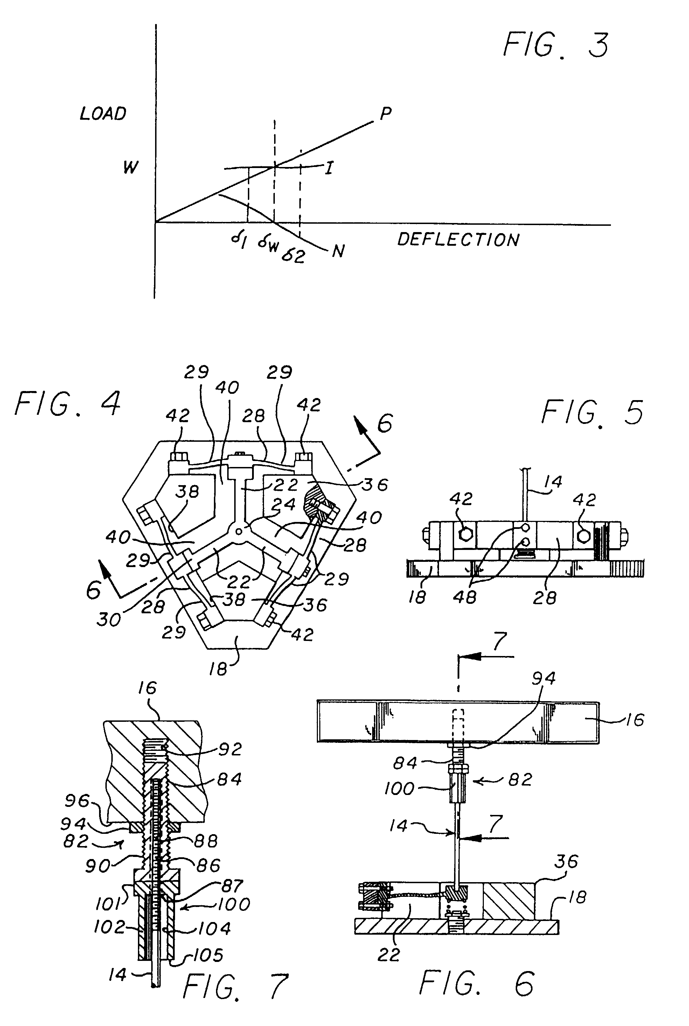

Each radial flexure 22 is connected to means for providing compressive radial force on the flexure. In the embodiment shown in FIGS. 2, 4, 5 and 6, these means are shown as three loading flexure assemblies 28 one of which is connected to an outer end 30 of each radial flexure 22. Each loading flexure assembly 28 has two flexures 29 connected between a thickened center piece 33 and two thickened ends 32 and 34 which are in turn mounted to spacer blocks 36 that are integrally formed on the base 18. As is shown better in FIG. 4, each spacer block 36 has an outer face 38 that is used for mounting purposes. The spacer blocks 36 are shaped and oriented in the arrangement shown in FIG. 4 to form several passages 40 in which the radial flexures 22 are positioned and allowed to move without any hindrance. The ends 32 and 34 of these loading flexure assemblies 28 are connected to the spacer blocks 36 by a bolt 42 or other fastening means.

As mentioned above, each loading flexure assembly 28 is in direct contact with one end 30 of a radial flexure 22. In the embodiment of FIG. 2, (and shown in greater detail in FIG. 9a), this end 30 of the radial flexure 22 includes a mounting plate 44 that is either integrally formed with the radial flexure or is a separate piece that is either welded or otherwise attached to the flexure 22. Each mounting plate 44 is attached to the center piece 33 of the loading flexure assembly 28. In FIGS. 2 and 9a, both the center piece 33 and mounting plate 44 have two or more bores 46 through which extends a tensioning bolt or rod 48. A nut 50 located at the end of each rod 48 insures that the center piece 33 and mounting plate 44 will remaining rigidly secured together.

This arrangement is just one of the many ways in which the loading flexure assembly can be secured to the radial flexure. Other mounting arrangements will become apparent to those skilled in the art. It is also possible to form the loading flexure assembly and the radial flexure as a separate machined piece thus eliminating the need to rely on a mounting or fastening arrangement to maintain the two elements together. A bolted or clamped connection can introduce mechanical friction between the joined pieces that can adversely affect performance of the isolation system. In operation, these loading flexures provide the compressive radial forces on the radial flexures that produce the negative stiffness that counteracts the positive spring stiffness generated by flexing of the radial flexures under the vertical weight loads.

In operation, each loading flexure assembly is designed to apply an inward radial force on the outer end of the radial flexure. This is simply achieved by moving the ends of the loading flexure assembly toward the center hub. In the embodiment shown in FIG. 2, the ends of the loading flexure assembly are movable in relation to the spacer blocks to vary the amount of radial force that is to be applied to the radial flexure. The bolts that hold the ends of the loading flexure assemblies in place can be simply tightened or "backed off" to achieve the required amount of radial force.

Figure 3 shows a load vs. displacement plot which illustrates the equalization principle that produces the low net spring stiffness for the vertical-motion isolator. This plot shows the load-displacement behavior of a typical linear spring means along with the characteristics of a typical negative stiffness mechanism. In FIG. 3, line P depicts the general load-displacement behavior of the spring means while line N depicts the negative stiffness mechanism. Line I shows the characteristics of the vertical-motion isolator which is merely the combination of the characteristics of the spring means and the negative stiffness mechanism.

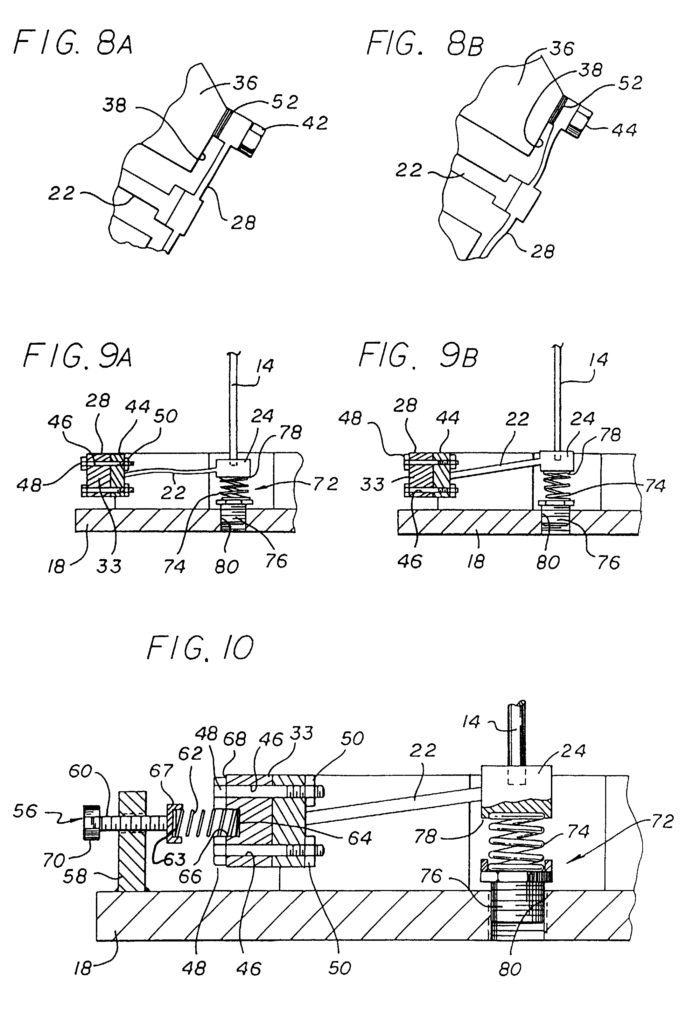

Line P shows a typical linear spring with a positive slope that represents the positive stiffness or spring rate. The spring is deflected an amount δ_{w} from its unloaded and undeformed shape, and at deflection δ_{w}, the spring supports the load W. The deflection δ_{w} corresponds to the center point of the vertical-motion isolator which is the center point of the over-center or snap-through mechanism that produces the negative stiffness. This is also the position about which the isolator operates to provide vertical-motion isolation. In the isolator of Figure 2 this corresponds to the position where the inner and outer ends of the radial flexures are at approximately the same vertical elevation. This is also illustrated in FIGS. 9A and 9B. FIG. 9B shows a radial flexure 22 in its unloaded and undeformed position. FIG. 9A shows the flexure deformed under the operating weight load to its approximate operating position where the center hub 24 has moved down an amount approximately δ_{w}. If no radial load were applied to the radial flexures, the load deflection behavior of the vertical isolator would correspond to line P of FIG. 3 and the stiffness of the isolator would correspond to the slope of line P. As compressive radial load is applied to the radial flexure, negative stiffness is produced which subtracts from the positive stiffness of the positive spring means. For each value of radial load, a negative-stiffness mechanism load-deflection curve could be plotted, such as the curve N of FIG. 3. These curves would have an approximately constant negative slope over a limited range of deflection about the center point. For zero or near-zero vertical stiffness, the design value or operating value for the radial load corresponds to the value at which this negative slope cancels or approximately cancels the positive slope from the positive spring means, as illustrated by the curves of FIG. 3. The isolator is typically designed for a range of deflections over which it can operate efficiently, such as depicted by the range of deflections between δ₁ and δ₂ in FIG. 3. As the isolator deflections increase outside of this range, the negative-stiffness mechanism behavior becomes increasingly nonlinear due to second-order effects from geometry changes associated with the deflections.

It should be appreciated that the isolator is not limited to the operating value of radial load that produces zero or near-zero vertical stiffness. It could be operated at any value of stiffness ranging from the slope of line P of FIG. 3 for zero radial load, to zero or near-zero for the critical value of radial load, to negative values of stiffness for radial loads exceeding the critical value. In fact, if the radial load on the flexure were reversed to load the flexure radially in tension rather than compression the net vertical stiffness of the isolator would be increased above the slope of line P of FIG. 3.

The particular plot shown in FIG. 3 is only for purposes of illustration and is by no means meant to be used as a basis for determining the load-deflection behavior of an actual isolator. It should be apparent that some calculations and experimentation may be necessary in order to determine the proper design parameters and load-deflection values needed to construct a vertical-motion isolator for a particular application. Also, when second-order effects are accounted for, it will become apparent that radial load also affects the flexural deformations of the radial flexures and the vertical position of the central hub, thereby affecting the center point or operating position of the isolator.

It should also be appreciated that the closer the isolator is operated to zero net stiffness, the more precise the radial force that is needed to place the negative stiffness mechanism at its proper operating point. Thus, the particular loading flexure assembly utilized in the embodiment depicted in FIG. 2 may not be sufficiently accurate for certain applications to generate the precise radial force needed to "fine tune" the isolator. As a result, other means providing more precise adjustment of the radial force may be required.

The loading flexure assembly shown in FIG. 2 has the capability for coarse adjustment of the radial force that can be applied to the radial flexure. This is achieved by simply moving the ends of the loading flexure assembly either towards or away from the spacer block on which it is mounted. FIGS. 8a and 8b show a simple arrangement that provides a more rigid attachment between the loading flexure assembly and the spacer block to reduce relative motion and undesirable effects of mechanical friction. It utilizes a number of shims 52 that are clamped between each end of the loading flexure assembly and the face 38 of the spacer block 36 for load adjustment. These shims 52 can be either added or removed prior to assembly in order to vary the amount of force to be applied to the radial flexure after assembly. In FIG. 8A, the loading flexure is shown in its unloaded position. In FIG. 8B, the same loading flexure is shown as it applies a substantial force on the radial flexure due to the deformation of the loading flexure in its clamped position. The minimum incremental adjustment in radial force depends on the minimum individual shim thickness and the stiffness of the loading flexure assembly.

FIG. 10 shows one means for producing a fine adjustment in radial force on the radial flexure. These means are shown as a fine adjustment mechanism 56 which contacts the center piece 33 of the loading flexure assembly to impart an additional small radial force to "fine tune" the negative stiffness mechanism. This adjustment mechanism 56 includes a supporting mount 58 which supports a threaded screw 60 having a soft spring 62 attached to it. This spring 62 contacts the center piece 33 of the flexure assembly to impart an additional force which supplements the force exerted by the loading flexure assembly. This soft spring 62 has one end 64 placed within a recess 66 that is specially formed on an outer side 68 of the center piece 33 of the loading flexure assembly. This recess 66 prevents the spring 62 from moving once the spring is in place and loaded. The opposite end 63 of the spring 62 is placed in a holder 67 that also prevents the spring from moving once loaded. The threaded screw 60 has a knob 70 located at one end of to allow the user to move the screw 60 as needed to increase or decrease the additional force on the loading flexure.

A soft spring and screw mechanism is utilized since it can effect a much smaller adjustment in force on the radial flexure than the loading flexure assembly of FIG. 2. The minimum incremental adjustment in radial force depends on the pitch of the screw 60, the stiffness of the soft spring 62 and the minimum practical rotation of the screw that can be imparted by the user. Any other means can be used to impart a small additional and precisely adjustable force on the loading flexure assembly for fine tuning purposes. For example, a solenoid or piezoelectric device can be attached between each loading flexure assembly and a support member to produce the additional force, and precision adjustments can be made through precision adjustments in the input electrical current to the device.

The vertical-motion isolation system also includes means for changing the load-carrying capacity of each vertical motion isolator and the position of the payload relative to the base. The isolator of FIGS. 2, 4, 5, 9A, 9B and 10 uses one embodiment for changing load-carrying capacity and payload position, which is a mechanism similar to the one used for providing fine adjustment to the radial force on the radial flexure. Referring to FIGS 9A, 9B and 10, this mechanism 72 includes a secondary linear spring 74 and an adjustment screw 76 that are placed directly beneath the central hub 24 to partially support the weight load exerted on the hub. The spring 74 comes in contact with the bottom 78 of the hub 24 to provide an additional upward force on the hub. The spring means for the isolator is now the combined spring of the radial flexures 22 and the secondary spring 74. During operation, the isolator supports a particular weight that causes the spring means to deflect from its initial unloaded position, illustrated in FIGS. 9B and 10, to its loaded center-point or operating position, illustrated in FIG. 9A. A change in weight load would cause the springs to deflect, moving the central hub 24 vertically away from the center-point position. Sufficiently small changes in weight load could usually be tolerated since, in general, there would be some net positive spring stiffness and there are finite vertical deflection limits within which the isolator can operate effectively. If the change in weight load were too large, the deflection of the central hub away from the center point could adversely affect the operation and performance of the isolator so the adjustment means 72 would be required to adjust for change in weight and central hub vertical position. The adjustment is achieved by raising or lowering the bottom end of the secondary spring 74 via the adjustment screw 76 which is positioned in a threaded bore 80 in the base 18 of the isolator. For example, raising the bottom of the secondary spring 74 allows this spring to carry additional weight while maintaining the central hub at the center point, without affecting the weight load carried by the radial flexures 22. Also, this adjustment does not affect the net vertical stiffness of the isolator since the spring 74 is linear.

The adjustment means for raising or lowering the bottom end of the spring 74 need not be a screw-type mechanism. Any translator such as a piezoelectric translator can be used. Also, the adjustment mechanism 72 need not be a spring and a translator, but can be any mechanism, electrical or mechanical, that will impart an adjustable upward force on the central hub, such as a voice coil, a solenoid or other similar force-producing mechanism. If the change in force applied by this mechanism causes a change in the effective vertical stiffness of this mechanism, then an accompanying adjustment in negative stiffness will be required, by adjusting the radial compressive forces applied to the radial flexures, in order to keep the isolator net vertical stiffness at its desired operating value.

The secondary spring 74 used in the mechanism 72 of FIGS 9A, 9B and 10 can support any fraction of the total vertical load. The case in which this spring 74 supports all of the vertical load represents another embodiment of the present invention, and this embodiment has particularly attractive features for certain applications when the secondary spring is a pneumatic spring with means for maintaining the vertical position of the payload. In this case, the radial flexures 22 contribute to the total positive stiffness but they do not support any of the weight load. Consequently, the radial flexures would be unloaded at the center point or operating position of the isolator. This would correspond to the position shown in FIG 9A, except the flexure 22 would be straight since it would not be deformed by bending mements from the weight load. The advantage of this embodiment is a low-force light-weight negative stiffness mechanism. The radial force required for the negative stiffness mechanism to cancel the positive stiffness depends on the positive vertical stiffness of the spring means and the length of the radial flexure. The effective vertical stiffness of a pneumatic spring capable of supporting a particular weight will be much smaller than that of a practical linear mechanical spring means suitable for this type of isolator, such as the radial flexure spring means of Figures 9A, 9B and 10. Therefore, the required radial force will be much smaller if a pneumatic spring is used to support the weight, and the resulting loading flexures and radial flexures required to impart the force and transmit the force within acceptable stress limits will be much smaller in cross-section and lighter in weight. Also, the radial force adjustment to fine-tune the isolator will be easier to achieve with a lower radial force.

The operation of the horizont: -motion isolation system is based upon a theory that by loading each column member isolator to approach its critical buckling load, it will still be stable enough to support the payload weight but will have little, if any, horizontal stiffness.

This approach might appear impractical, at first thought, and in fact, might be impractical if it were not for a mechanism, which is also part of the present isolation system, that provides a reasonable safety factor against collapse or excessive deflection that could damage the payload or the isolation system components in the event that the critical buckling load were exceeded. This can be explained with the aid of FIGS. 13a thru 13F. FIGS. 13A shows an elevational view of a horizontal-motion isolation system, such as that of FIG. 12. A rigid platform 18 is rigidly connected to and supported on three column members 14 which are rigidly connected to the foundation 144. FIG. 13B shows the approximate deformed shape of the column members resulting from translation of the platform a horizontal distance δ_{H}. This translation could be caused by a horizontal farce on the platform, and it could also be caused by the vertical loads on the column members exceeding their critical buckling loads and causing the column members to buckle or collapse. In other words, the deformation shown also represents the approximate mode of buckling or collapse. In this case, the system would be unstable so that FIG. 13B would represent the deformed shape at one instant in time, and the deformation would continue to increase until complete collapse or failure. If the vertical loads on the columns were below the critical buckling loads, and a horizontal force on the platform caused it to translate as shown in FIG. 13B, then upon removal of the horizontal force the system would restore to its initial shape as in FIG 13A. If the vertical loads were right at the critical buckling loads, the system would stay in the position shown in FIG 13A independent of the value of δ_{H} for relatively small values of δ_{H} and without the application of a horizontal force on the platform. (These conclusions are based on classical theory of elastic stability with the usual assumptions of small deflections, linear elastic behavior, etc.). Thus, when the loads on the columns are equal to their critical buckling loads, the platform can be displaced horizontally without application of a horizontal load, except, of course, to overcome inertia, so that the column-member horizontal stiffness is essentially zero. FIG. 13C shows an individual column member of length L deformed as in FIG. 13B and supporting the critical load F_{CR}. The upper end of the column member can displace horizontally but its slope is constrained to the vertical by its rigid connection to the platform 18. From symmetry there is an inflection point or point of zero curvature and zero bending moment at the mid-height 19 of the column member. Also, since, when the column member is loaded to its critical buckling load it can displace horizontally without any horizontal load, the column member at its mid-height 19 supports only the vertical load F_{CR} without bending moment or lateral load. Thus, the critical buckling load of the column member of FIGS 13B or 13C is equivalent to that of a fixed-free column of length L/2 as shown in FIG. 13D.

Consider, now, that the platform 18 is limited to a small displacement, relative to the column member dimensions, in any horizontal direction by mechanical stops, for example. Under this constraint, in order for one of the column members to buckle and collapse it would have to deform into the approximate shape shown in FIG. 13E, since now the slope of the upper end is constrained to the vertical, and its horizontal displacement is limited to a very small value. Now the buckled shape of the column member has two inflection points 21 and 23 at the approximate locations shown in FIG 13E. Since, at these inflection points there is no bending moment and no lateral load, the critical value of the column member under this condition is approximately equivalent to that of a fixed-free column of length L/4, as shown in FIG. 13F. Since, for a fixed-free column, the critical buckling load is inversely proportional to the square of the column length, the critical buckling load for the column member of FIG. 13E is approximately 4 times that of the column member of FIGS 13B or 13C. Thus, any means that limits the horizontal displacements of the upper end of a column member isolator, relative to its lower end, to very small values will provide a substantial safety factor against collapse or damaging over stressing of the member components.

Under normal operation of the present isolation system the horizontal displacements will be small relative to the column member dimensions. Therefore, mechanical stops can be used as a safety factor for unusual upsets that could cause the critical buckling loads to be exceeded, without affecting the normal operation. The stops would allow horizontal displacements larger than those usually experienced during operation, and would still provide a safety factor against collapse or damaging overstressing. Of course, when the platform or other member is in contact with the stops, performance of the isolator is severely impaired, so a design objective is to prevent "bottom-out" against the stops. For totally passive use of the invention, this requires sufficient margin between the column member critical buckling load and the maximum loads imposed on the column member so that the critical buckling load is not exceeded, except under unusual circumstances. For use of this invention in an active system, displacement sensors would be used with a feed-back control system and means (described below) to provide automatic adjustment of column member critical-buckling loads or adjustment of loads applied to the columns. Corrective forces opposing the motions could also be used in active systems in order to limit displacements. With an active system, the column members could operate at their critical buckling loads or even above their critical buckling loads.

FIGS. 6 and 7 show a length adjustment mechanism 82 that can effectively change the length and critical buckling load for each column member. This length adjustment mechanism 82 consists of an externally threaded adjustable screw 84 which is threadingly engaged with the end 87 of the column member 14. This adjustable screw 84 has an internal bore 88 which is internally threaded to permit it to be moved along the threaded end 87 of the column member. The adjustment screw 84 has an outer surface 90 which is also threaded and is receivable in a threaded bore 92 formed in the platform 16. The adjustment screw 84, as mentioned above, is movable along the end 87 of the column member to permit the effective length of the member to be lengthened or shortened depending on the placement of this adjustment screw 84. For example, if the adjustment screw is threaded down on the column member, the effective length of the member is decreased. Conversely, as the adjustment screw 84 is moved out along the end of the member, the effective length of the member increases. By manipulating this adjustment member 84, one can change the effective length so as to provide a means for changing the critical buckling load for a particular column member. Two locking nuts 94 and 101 are provided on this adjustment to create a more rigid attachment between the column member 14 and the platform 16. The locking nut 94 contacts the underside 96 of the platform 16 and the locking nut 101 contacts the underside of the adjustable screw 84.

One of the simplest means for fine-tuning the horizontal-motion isolation system is the addition and removal of weights or "ballast" to and from the payload or payload platform in order to adjust the column member loads to approach their critical buckling loads as closely as desired. A system of stops that limit horizontal deflections can facilitate this fine tuning. Sufficient weight can be added until the system has "buckled" and displaced horizontally against the stops. Then, small increments of weight can be removed until the loads on the column members are slightly below the critical buckling loads, at which point the system will lift off stops. The natural frequency of oscillations of the payload in a horizontal direction, within the allowable displacement limits, can be used to monitor the tuning. The closer the system is to buckling and displacing into the stops, the lower the horizontal stiffness and, hence, the lower the natural frequency.

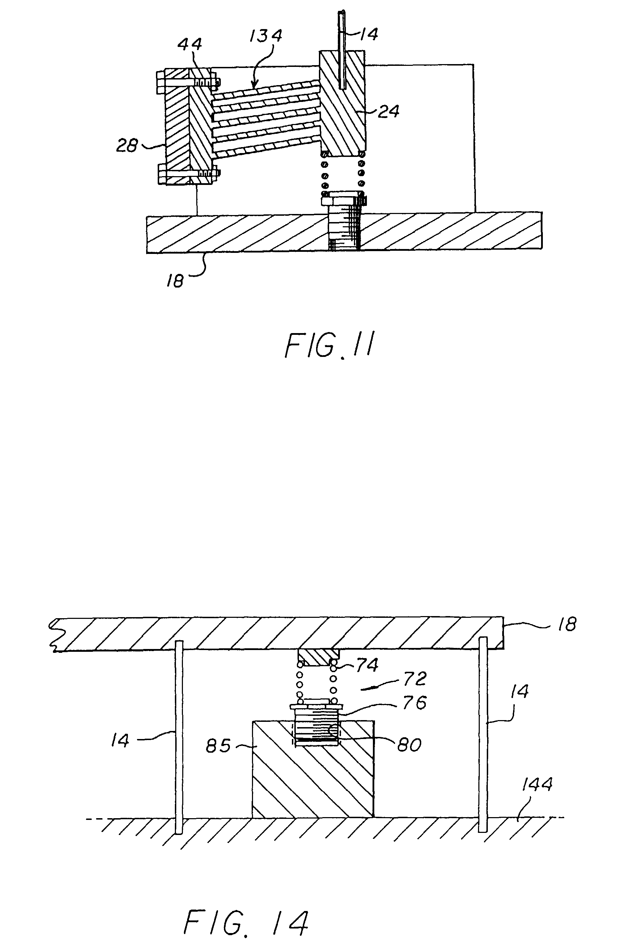

Referring again to FIGS. 13A thru 13C, if the load on an individual column member were above the critical buckling load, the excess load would impart a negative stiffness to the column member in the horizontal direction of the displacement. If the payload platform 18 were partially supported on a secondary spring imparting positive stiffness for any small horizontal displacement, the negative stiffness could be adjusted to substantially cancel the positive stiffness so as to produce zero or near-zero spring rate in any horizontal direction. This is the basis for another embodiment of a horizontal-motion isolation system, and another mean for adjusting the system horizontal stiffness, as shown in FIG.14. A section of a platform 18 supporting a payload (not shown) is supported on column members 14 and a secondary spring 74, which is part of a horizontal stiffness adjustment mechanism 72, similar to that shown in FIG. 10. Here, an adjustment screw 76 is positioned in a threaded bore 80 located in a spacer block 85 attached to foundation 144. Only two column members 14 are shown in FIG. 14. The spring 74 exhibits a positive spring stiffness for displacement of the platform 18 in any horizontal direction. The column members 14 are loaded above their critical buckling loads by the supported weight so as to produce a negative stiffness for displacement of the platform 18 in any horizontal direction. By adjusting the relative weight loads carried by the column members 14 and the secondary spring 74, the negative stiffness from the column members 14 can be made to cancel the positive stiffness from the spring 74 so as to produce zero or near-zero net horizontal stiffness. This adjustment can be made via the adjustment screw 76 which raises or lowers the base of spring 74, thereby causing the spring to carry more of less of the weight load imparted by the platform and thereby adjusting the weight loads carried by the column members 14. The particular arrangement shown in FIG. 14 is just one of numerous combinations that are possible using this principal of the present invention. For example, to provide substantially zero net stiffness for translation of the platform in any horizontal direction, as well as for rotation of the platform about a vertical axis through the system center-of-gravity, three pairs of secondary springs with adjustment means 72 and column members 14 could be used to support a platform. The pairs of secondary springs and column members would be appropriately located, relative to the platform center-of-gravity, in order to satisfy the necessary force and moment conditions. Also, other means could be used to provide adjustable secondary support of the platform or to raise and lower the bottom of spring 74, as discussed previously.

One form of a means to limit horizontal deflections is a stop mechanism 100 which is shown in FIGS. 6 and 7. This stop mechanism 100 is attached to the locking nut 101 and is embodied in a tubular member 102 which partially surrounds the column member 14. This tubular member 102 has an inner diameter which is greater than the diameter of the column member 14 thus providina a limited distance between the two elements. The bottom end 105 the inner surface 104 of this tubular member 102 is designed to abut against and limit further deformation of the column member as it deforms horizontally during buckling as in FIG. 13B. This stops mechanism 100 is relatively easy to implement, but it does not provide as high a safety factor against collapse as a system of positive mechanical stops.

The vertical-motion isolator shown in FIG. 2 is not limited to three radial flexures connected at a central hub and spaced 120°. Only two radial flexures spaced 180° or more than three radial flexures could also be used, such as four radial flexures spaced 90° or six radial flexures spaced 60°. Referring now to FIG. 11, another embodiment which shows a stack of radial flexures 134 can be used to provide a more compact isolator. These radial flexures are similar to the ones shown in FIGS. 1 and 2 except that the increased number of them can now support greater vertical load. The loading flexure assemblies used in the isolator of FIG. 2 can be similarly stacked.

FIG. 12 shows another embodiment of a vibration isolation system 138 which shows the diversity and the number of combinations of components that make up the present invention. In FIG. 12 the horizontal-motion isolation system is utilized as the base support for supporting both the vertical-motion isolator 140 and the object to be isolated (not shown). This system 138 utilizes a single vertical-motion isolator 140 that is similar to the isolator described and shown in FIG 2 except that the central hub is attached to a support structure 142 on which the object is mounted. This vertical-motion isolator 140 is supported by three horizontal-motion isolation members 14 that are vertically disposed between the base of the isolator 18 and the foundation 144. This system 138 operates similarly as the previously discussed systems only now a single vertical-motion isolator provides the means for isolating the vertical component of the vibration.

As indicated previously, the vibration isolation system provided by this invention can be used passively, or with motion-sensing elements, a feed-back loop and actuating means so it can be used as an active isolation system. All of the adjustment means previously described can be operated electrically. For example, all screw-type actuators can be powered by electrical stepper motors or, in some cases, replaced by electrical translators such as piezoelectric translators or solenoids. The motion-sensing elements can be accelerometers mounted on the payload or payload platform and on the base or foundation, or displacement transducers mounted between the payload or payload platform and the base or foundation to measure relative motions. Another means of sensing relative motions between the payload and the base is through the use of strain gages mounted on the spring means, such as the radial flexures. These could be configured to measure bending strain, which could be calibrated against axial displacement of the central hub. Various control functions could be used in the feed-back loop in order to limit the response of the payload and keep the relative displacements within acceptable limits. A feed-back loop could also be used to optimize the spring rate adjustment, such as the fine-tuning load on a loading flexure, in order to minimize the payload acceleration response.

The various components that make up the embodiments of the present invention can be made from a number of suitable materials. For example, structural metals such as steel and aluminum alloys, non-metallics, and other structural materials that have appropriate elastic and strength properties could be suitable for use. Due to the sensitivity of the isolation apparatus itself, in some embodiments, the same material should be used for the base structures and other components, such as loading flexures and radial flexures, since the device can be very temperature sensitive. For example, if different materials are used for different components, variations in the thermal expansion coefficients can cause the components to expand differently when subjected to a temperature change. As a result, unwanted strain on some of the extremely sensitive components can detrimentally affect the system. Materials with low coefficients of thermal expansion, such as Invar, can be used to minimize temperature effects.

While several particular forms of the invention have been illustrated and described, it will be apparent that various modifications can be made without departing from the scope of the invention. Accordingly, it is not intended that the invention be limited, except as by the attached claims.

## Claims

1. An omnidirectional vibration-isolating suspension system for supporting an object having mass in an acceleration field and maintaining the object in an equilibrium position relative to a base while suppressing transmission of vibratory motion between the object and base, said system having a first isolator (14), including a first elastic structure (14) having first (87) and second (26) ends spaced apart to define an axial direction, and a second isolator (12) connected axially in series with said first isolator, said second isolator including a second elastic structure (22) adapted to receive a compressive loading force transverse with respect to said axial direction, said second elastic structure having an end (24) for supporting the object and stiffness in the axial direction, said second elastic structure being transversely loaded with respect to said axial direction to approach its point of elastic instability to cause a substantial reduction of its stiffness in the axial direction, wherein said first and second isolators have load-supporting capability to support the object in the axial direction and are connected between the object and base, said second elastic structure having a point of elastic instability in response to application of a compressive loading force to said second elastic structure where at the point of elastic instability said second elastic structure has substantially zero stiffness in the axial direction, said system characterized by:
said first elastic structure having transverse stiffness in response to displacement of said first end relative to said second end in any direction substantially transverse to the axial direction without rotation of said second end, or said second end relative to said first end in any direction substantially transverse to the axial direction without rotation of said first end, and stiffness in the axial direction to support the object, said first elastic structure having a point of elastic instability in response to loading in the axial direction where at the point of elastic instability said first elastic structure has substantially zero transverse stiffness, said first elastic structure being loaded in the axial direction to approach its point of elastic instability to cause a substantial reduction of the transverse stiffness while maintaining sufficient stiffness in the axial direction to support the object.

2. The system as defined in Claim 1 further including means (72) for adjusting the load-supporting capability of said second isolator while maintaining the equilibrium position of the system, wherein the load is caused by supporting the object in the acceleration field.

3. The system as defined in Claim 2 wherein said means for adjusting the load-supporting capability of said second isolator comprise:
secondary supporting means (74) having one end operatively connected to the object and another end operatively connected to the base, said secondary supporting means supporting at least a portion of the object in the axial direction; and
means (76) for adjusting the relative position of said ends of said secondary supporting means.

4. The system as defined in Claim 1 further including means (82, 110, 72) for adjusting the transverse stiffness of said first elastic structure and means (28,42) for adjusting the stiffness in the axial direction of said second elastic structure.

5. The system as defined in Claim 4 wherein said means for adjusting the transverse stiffness comprise means (82,110) for adjusting the buckling strength of said first elastic structure.

6. The system as defined in Claim 5 wherein said first elastic structure comprises at least one column (14) and said means (82) for adjusting the buckling strength comprise means for changing the length of said column.

7. The system defined in Claim 4 wherein said means for adjusting the stiffness in the axial direction of the second elastic structure comprise means (42, 56) for adjusting the compressive loading force on said second elastic structure.

8. The system as defined in Claim 1 further including a deformed third elastic structure (28) operatively connected with said second elastic structure for applying the compressive loading force to said second elastic structure, wherein said means for adjusting the compressive loading force on said second elastic structure comprises means (42, 56) for adjusting the deformation of said third elastic structure.

9. The system as defined in Claim 8 wherein said means for adjusting the instability-producing load is electrically controlled.

10. The system as defined in Claim 1 wherein said first elastic structure comprises at least one column (14).

11. The system as defined in Claim 1 wherein said first elastic structure comprises at least one beam-column.

12. The system as defined in Claim 1 wherein said second elastic structure comprises at least one beam column (22) oriented substantially transverse to the axial direction.

13. The system as defined in Claim 1 further including means (72) for adjusting the load-supporting capability of said first isolator.

14. The system as defined in Claim 1 further including means (100) operatively associated with said first elastic structure for limiting transverse displacements of the object about the equilibrium position relative to the base.

## Patentansprüche

1. Allseitig schwingungsdämpfendes Aufhängungssystem zum Tragen eines Objekts mit Masse in einem Beschleunigungsfeld sowie zum Halten des Objekts an einer Gleichgewichtsposition im Verhältnis zu einer Basis, wobei die Übertragung von Schwingungsbewegungen zwischen dem Objekt und der Basis unterdrückt wird, wobei das genannte System eine erste Dämpfungseinrichtung (14) aufweist, mit einer ersten elastischen Struktur (14), die erste (87) und zweite (26) Enden aufweist, die beabstandet sind, so daß eine axiale Richtung definiert wird, und mit einer zweiten Dämpfungseinrichtung (12), die axial in Reihe mit der genannten ersten Dämpfungseinrichtung verbunden ist, wobei die genannte zweite Dämpfungseinrichtung eine zweite elastische Struktur (22) aufweist, die eine transversal zu der genannten axialen Richtung gerichtete komprimierende Lastkraft aufnehmen kann, wobei die genannte zweite elastische Struktur ein Ende (24) zur Unterstützung des Objekts und der Steifheit in die axiale Richtung aufweist, wobei die genannte zweite elastische Struktur eine im Verhältnis zu der genannten axialen Richtung transversale Belastung aufweist, um sich ihrem Punkt der elastischen Instabilität zu nähern, um eine wesentliche Verringerung der Steifheit in die axiale Richtung zu bewirken, wobei die genannten ersten und zweiten Dämpfungseinrichtungen eine Lasttragefähigkeit aufweisen, um das Objekt in die axiale Richtung zu stützen, und wobei sie zwischen dem Objekt und der Basis verbunden sind, wobei die genannte zweite elastische Struktur einen Punkt der elastischen Instabilität als Reaktion auf die Ausübung einer komprimierenden Lastkraft auf die genannte zweite elastische Struktur aufweist, wobei die genannte zweite elastische Struktur an dem Punkt der elastischen Instabilität in die axiale Richtung eine Steifheit von im wesentlichen Null aufweist, wobei das genannte System dadurch gekennzeichnet ist, daß:
die genannte erste elastische Struktur eine transversale Steifheit als Reaktion auf die Verschiebung des genannten ersten Endes im Verhältnis zu dem genannten zweiten Ende in eine beliebige im wesentlichen transversale Richtung zu der axialen Richtung ohne Rotation des genannten zweiten Endes aufweist, oder des genanten zweiten Endes im Verhältnis zu dem genannten ersten Ende in jede im wesentlichen transversale Richtung zu der axialen Richtung ohne Rotation des genannten ersten Endes, und mit einer Steifheit in die axiale Richtung zum Tragen des Objekts, wobei die genannte erste elastische Struktur einen Punkt der elastischen Instabilität als Reaktion auf eine Belastung in die axiale Richtung aufweist, wobei die genannte erste elastische Struktur an dem Punkt der elastischen Instabilität eine transversale Steifheit von im wesentlichen Null aufweist, wobei die genannte erste elastische Struktur eine Belastung in die axiale Richtung aufweist, um sich ihrem Punkt der elastischen Instabilität zu nähern, um eine wesentliche Verringerung der transversalen Steifheit zu bewirken, während eine ausreichende Steifheit in die axiale Richtung zum Tragen des Objekts aufrechterhalten wird.

2. System nach Anspruch 1, ferner mit Einrichtungen (72) zur Anpassung der Lasttragefähigkeit der genannten zweiten Dämpfungseinrichtung, während die Gleichgewichtsposition des Systems beibehalten wird, wobei die Last durch das Tragen des Objekts in dem Beschleunigungsfeld verursacht wird.

3. System nach Anspruch 2, wobei die genannten Einrichtungen zur Anpassung der Lasttragefähigkeit der genannten zweiten Dämpfungseinrichtung folgendes umfassen:
eine sekundäre Trägereinrichtung (74), wobei ein Ende funktionsfähig mit dem Objekt und ein anderes Ende funktionsfähig mit der Basis verbunden ist, wobei die sekundäre Trägereinrichtung mindestens ein Teilstück des Objekts in die axiale Richtung trägt; und
eine Einrichtung (76) zur Anpassung der relativen Position der genannten Enden der genannten sekundären Trägereinrichtung.

4. System nach Anspruch 1, wobei das System ferner Einrichtungen zur Anpassung der transversalen Steifheit der genannten ersten elastischen Struktur und Einrichtungen (28, 42) zur Anpassung der Steifheit in die axiale Richtung der genannten zweiten elastischen Struktur aufweist.

5. System nach Anspruch 4, wobei die genannten Einrichtungen zur Anpassung der transversalen Steifheit Einrichtungen (82, 110) zur Anpassung der Knickfestigkeit der genannten ersten elastischen Struktur aufweisen.

6. System nach Anspruch 5, wobei die genannte erste elastische Struktur mindestens einen Ständer (14) umfaßt, und wobei die genannten Einrichtungen (82) zur Anpassung der Knickfestigkeit Einrichtungen zur Veränderung der Länge des genannten Ständers aufweisen.

7. System nach Anspruch 4, wobei die genannten Einrichtungen zur Anpassung der Steifheit in die axiale Richtung der genannten zweiten elastischen Struktur Einrichtungen (42, 56) zur Anpassung der komprimierenden Lastkraft auf die genannte zweite elastische Struktur umfassen.

8. System nach Anspruch 1, wobei das System ferner eine verformte dritte elastische Struktur (28) umfaßt, die funktionsfähig mit der genannten zweiten elastischen Struktur verbunden ist, um die komprimierende Lastkraft auf die genannte zweite elastische Struktur auszuüben, wobei die genannte Einrichtung zur Anpassung der komprimierenden Lastkraft auf die genannte zweite elastische Struktur Einrichtungen (42, 56) zur Anpassung der Verformung der genannten dritten elastischen Struktur umfaßt.

9. System nach Anspruch 8, wobei die genannte Einrichtung zur Anpassung der die Instabilität erzeugenden Last elektrisch geregelt wird.

10. System nach Anspruch 1, wobei die genannte erste elastische Struktur mindestens einen Ständer (14) umfaßt.

11. System nach Anspruch 1, wobei die genannte erste elastische Struktur mindestens einen Trägerständer umfaßt.

12. System nach Anspruch 1, wobei die genannte zweite elastische Struktur mindestens einen Trägerständer (22) umfaßt, der im wesentlichen transversal zu der axialen Richtung ausgerichtet ist.

13. System nach Anspruch 1, wobei das System ferner Einrichtungen (72) zur Anpassung der Lasttragefähigkeit der genannten ersten Dämpfungseinrichtung aufweist.

14. System nach Anspruch 1, ferner mit Einrichtungen (100), die der genannten ersten elastischen Struktur funktionsfähig zugeordnet sind, um transversale Verschiebungen des Objekts um die Gleichgewichtsposition im Verhältnis zu der Basis zu begrenzen.

## Revendications

1. Système de suspension à isolation de vibrations omnidirectionnelles pour supporter un objet ayant une masse dans un champ d'accélération et maintenir l'objet dans une position d'équilibre par rapport à une base tout en supprimant la transmission du mouvement vibratoire entre l'objet et la base, ledit système comprenant un premier isolateur (14), incluant une première structure élastique (14) qui présente une première (87) et une deuxième (26) extrémités mutuellement espacées pour définir une direction. axiale, et un deuxième isolateur (12) connecté axialement en série avec ledit premier isolateur, ledit deuxième isolateur incluant une deuxième structure élastique (22) prévue pour recevoir une force de charge de compression transversale par rapport à ladite direction axiale, la deuxième structure élastique ayant une extrémité (24) pour supporter l'objet et une rigidité dans la direction axiale, ladite deuxième structure élastique étant chargée transversalement par rapport à ladite direction axiale pour s'approcher de son point d'instabilité élastique afin de provoquer une réduction importante de sa rigidité dans la direction axiale, dans lequel lesdits premier et deuxième isolateurs ont une capacité de support de charge permettant de supporter l'objet dans la direction axiale et sont connectés entre l'objet et la base, ladite deuxième structure élastique ayant un point d'instabilité élastique en réponse à l'application d'une force de charge de compression à ladite deuxième structure élastique où, au point d'instabilité élastique,ladite deuxième structure élastique a une rigidité sensiblement nulle dans la direction axiale, ledit système étant caractérisé en ce que :
ladite première structure élastique possède une rigidité transversale en réponse au déplacement de la dite première extrémité par rapport à ladite deuxième extrémité dans toute direction sensiblement transversale à la direction axiale sans rotation de ladite deuxième extrémité, ou bien de ladite deuxième extrémité par rapport à ladite première extrémité dans toute direction sensiblement transversale à la direction axiale sans rotation de ladite première extrémité, et une rigidité dans la direction axiale pour supporter l'objet, ladite première structure élastique ayant un point d'instabilité élastique en réponse à une charge dans la direction axiale où, au point d'instabilité élastique, ladite première structure élastique a une rigidité transversale sensiblement nulle, ladite première structure élastique étant chargée dans la direction axiale pour s'approcher de son point d'instabilité élastique afin de provoquer une réduction importante de la rigidité transversale tout en maintenant une rigidité dans la direction axiale suffisante pour supporter l'objet.

2. Système selon la revendication 1, comprenant en outre des moyens (72) de réglage de la capacité de support de charge dudit deuxième isolateur tout en maintenant la position d'équilibre du système, dans lequel la charge résulte de ce que l'objet est supporté dans le champ d'accélération.

3. Système selon la revendication 2, dans lequel lesdits moyens de réglage de la capacité de support de charge dudit deuxième isolateur comprennent :
des moyens de support secondaires (74) dont une extrémité est fonctionnellement reliée à l'objet et une autre extrémité est fonctionnellement reliée à la base, lesdits moyens de support secondaires supportant au moins une partie de l'objet dans la direction axiale ;
et des moyens (76) de réglage de la position relative desdites extrémités desdits moyens de support secondaires.

4. Système selon la revendication 1, comprenant en outre des moyens (82,110,72) de réglage de la rigidité transversale de ladite première structure élastique et des moyens (28,42) de réglage de la rigidité dans la direction axiale de ladite deuxième structure élastique.

5. Système selon la revendication 4, dans lequel lesdits moyens de réglage de la rigidité transversale comprennent des moyens (82,110) de réglage de la résistance au flambage de ladite première structure élastique.

6. Système selon la revendication 5, dans lequel ladite première structure élastique comprend au moins une colonnette (14) et lesdits moyens (82) de réglage de la résistance au flambage comprennent des moyens de changement de la longueur de ladite colonnette.

7. Système selon la revendication 5, dans lequel lesditsmoyens de réglage de la rigidité dans la direction axiale de la deuxième structure élastique comprennent des moyens (42,56) de réglage de la force de charge de compression sur ladite deuxième structure élastique.

8. Système selon la revendication 1, comprenant en outre une troisième structure élastique déformée (28) fonctionnellement reliée à ladite deuxième structure élastique pour appliquer la force de charge de compression à ladite deuxième structure élastique, dans lequel lesdits moyens de réglage de la force de charge de compression sur ladite deuxième structure élastique comprennent des moyens (42,56) de réglage de la déformation de ladite troisième structure élastique.

9. Système selon la revendication 8, dans lequel lesdits moyens de réglage de la charge engendrant l'instabilité sont commandés électriquement.

10. Système selon la revendication 1, dans lequel ladite première structure élastique comprend au moins une colonnette (14).

11. Système selon la revendication 1, dans lequel ladite première structure élastique comprend au moins un dispositif de poutre-colonnette.

12. Système selon la revendication 1,dans lequel ladite deuxième structure élastique comprend au moins un dispositif de poutre-colonnette (22) orienté sensiblement transversalement à la direction axiale.

13. Système selon la revendication 1, comprenant en outre des moyens (72) de réglage de la capacité de support de charge dudit premier isolateur.

14. Système selon la revendication 1, comprenant en outre des moyens (100) fonctionnellement associés à ladite première structure élastique pour limiter les déplacements transversaux de l'objet autour de la position d'équilibre par rapport à la base.
